# EUROPEAN PATENT APPLICATION

(11) **EP 4 749 059 A1**
(43) Date of publication of application: **27.05.2026**
(21) Application number: 25213120.6
(22) Date of filing: 03.11.2025
(51) Int. Cl.: E04H 15/48, E04H 15/36, F16C 11/10

(54) **JOINT FOR A PORTABLE SHELTER**

(30) Priority: 25.11.2024 GB 202417247
(71) Applicant: Fox International Group Limited, Warley Brentwood Essex CM14 5EG (GB)
(72) Inventor: TAYLOR, Adam, Brentwood, CM14 5EG (GB)
(74) Representative: Mathys & Squire

(57) **Abstract**

A joint for a portable shelter is disclosed herein. The joint comprises a first support pole fixedly coupled to a first body and a second support pole fixedly coupled to a second body. The second body is configured to mate with a corresponding portion of the first body in a mated configuration. The second body is coupled to the first body via a biased pivot such that the second support pole is pivotable relative to the first support pole. The second body is retractable against the biased pivot and pivotable about the biased pivot from the mated configuration to a retracted configuration.

## Description

### Field of the invention

The present disclosure relates to a joint for a portable shelter, and a portable shelter including a tent frame having such a joint.

### Background

Portable shelters, such as the Fox^{™} Frontier^{™} bivvy, are often used in outdoor sporting activities such as angling. Such bivvies often comprise a central hub or mounting block from which a plurality of limbs extend, connected to fabric, to provide a shelter for a user.

Such portable shelters have conflicting constraints; they need to be strong and resilient to local weather, but also need to be affordable and portable. To make such structures portable, the limbs may be collapsable relative to the central hub or mounting block, such that the limbs can be folded between erect and stowed configurations relative to the central hub or mounting block. Furthermore, in some examples, the limbs themselves may be foldable to further aid portability of such structures.

EP4424952 describes an example of a folding mechanism that forms a joint for a portable structure. It describes a joint having a body with a first section and a second section configured to be pivotable relative to each other above a pivot axis between a collapsed position and an erected position. The joint also comprises a first support pole and a second support pole pivotable relative to the first support pole, wherein the first pole is connected to the first section and the second pole is connected to the second section. It also comprises a latching mechanism configured to releasably secure the first section to the second section in the erected position, wherein the latching mechanism comprises a retention arrangement located on the second section and the first support pole, wherein the first support pole is axially moveable relative to the first section between a retracted position and an extended position, and wherein in the extended position the first support pole is configured to extend within the second section of the body to engage with the retention arrangement and achieve latching.

### Summary of the invention

Aspects of the invention are as set out in the independent claims and optional features are set out in the dependent claims. Aspects of the invention may be provided in conjunction with each other and features of one aspect may be applied to other aspects.

In a first aspect there is provided a joint for a portable shelter. The joint comprises a first support pole fixedly coupled to a first body and a second support pole fixedly coupled to a second body. The second body is configured to mate with a corresponding portion of the first body in a mated configuration. The second body is coupled to the first body via a biased pivot such that the second support pole is pivotable relative to the first support pole. The second body is retractable against the biased pivot and pivotable about the biased pivot from the mated configuration to a retracted configuration.

The biased pivot may be fixed relative to the first body and the second body has a slot for receiving the biased pivot, and wherein the biased pivot is slideable within the slot of the second body.

The slot in the second body may be offset from the longitudinal axis of the second support pole and is arranged parallel to the longitudinal axis of the second support pole such that the second body is slideable in a direction parallel to the longitudinal axis of the second support pole.

The fixed pivot may be offset from the longitudinal axis of the first support pole and the longitudinal axis of the second support pole.

The second body may comprise biasing means configured to engage with the pivot in the slot. The biasing means may comprise at least one spring axially offset from the longitudinal axis of the second support pole.

In some examples, when the second body is in the mated configured it is rotationally fixed relative to the first body, and when the second body is retracted out of the mated configuration to the retracted configuration, the second body and the second support pole are pivotable relative to the first body and first support pole.

In some examples, rotation of the second body relative to the first body is inhibited until the second body is retracted relative to the first body past a selected threshold retraction distance, whereupon rotation of the second body relative to the first body is permitted.

In some examples, a distal portion of the first body comprises a receiving portion configured to house and receive at least a corresponding distal portion of the second body in the mated configuration.

In some examples, the second body comprises a proximal end for receiving the second support pole and a protrusion at a distal end, wherein the receiving portion of the first body is a bore for receiving the protrusion of the second body.

In some examples, in the mated configuration movement of the second body is confined to an axial movement in and out of the mated configuration against the biasing means parallel to the longitudinal axis of the bore.

The protrusion of the second body may be configured to extend in a direction corresponding to the longitudinal axis of the second support pole.

The protrusion of the second body may comprise a chamfered distal end, and wherein the bore in the first body also comprises a chamfered proximal portion for receiving the chamfered distal end of the second body. The shape of the chamfer may be arcuate. Advantageously the chamfer facilitates rotation of the second body relative to the first body when the second body has been retracted past a selected threshold retraction distance but is at least still partially inside the bore.

The joint may be configured to hold the second support pole at an angle relative to the first support pole. The angle may be an obtuse angle, for example between 150 and 170 degrees.

The first body may comprise a bend, and a proximal portion of the first body that is fixedly coupled to the first support pole is one side of the bend, and a distal portion of the first body that mates with the second body is the other side of the bend.

The first body may comprise a rib connecting the proximal and distal portions of the first body either side of the bend, wherein the rib is configured to abut the second body when the second body is in the retracted configuration.

The first body may comprise a bore at a proximal end for receiving the first support pole. The bore may be sized to provide an interference fit with the first support pole but could also have a fastening means to secure the first support pole to the first body. For example, the first body may comprise a fastener for fixedly coupling the first support pole to the first body.

The first support pole and the first body may each comprise an anti-rotation feature, wherein the anti-rotation feature of the first support pole is configured to correspond to the anti-rotation feature of the first body. The second support pole and the second body may each comprise an anti-rotation feature, wherein the anti-rotation feature of the second support pole is configured to correspond to the anti-rotation feature of the second body. The anti-rotation feature may be a flat, for example a notch forming a flat surface.

The second body may comprise a grip for engagement by a user to retract the second body relative to the first body.

The second body may comprise a pair of ridges spaced either side of the second body, wherein the pair of ridges are configured to engage with a corresponding pair of slots on the first body to inhibit rotation of the second body relative to the first body when the second body is received by the first body in the mated configuration.

In another aspect there is provided a portable shelter comprising a tent frame having at least one joint of the aspect described above, the portable shelter optionally having sheet material supported by the tent frame.

### Drawings

Embodiments of the disclosure will now be described, by way of example only, with reference to the accompanying drawings, in which:
**Fig. 1** shows a perspective view from the front of an example portable shelter comprising tent frame having a hub from which a plurality of limbs extend in a erect configuration;
**Fig. 2** shows a perspective view of a first embodiment of an example joint;
**Fig. 3** shows a side view of the second embodiment of the example joint in the mated or erect configuration;
**Fig. 4** shows a side view of the second embodiment of the joint of **Fig. 3** in a partially collapsed or retracted configuration;
**Fig. 5** shows a side view of the second embodiment of the joint of **Figs. 3** **and** **4** in the fully collapsed or retracted configuration;
**Fig. 6** shows a perspective view of the joint of **Figs. 2 to 5** in the retracted or collapsed configuration;
**Fig. 7** shows a cross-section of the second embodiment of the example joint;
**Fig. 8** shows a perspective enlarged view of the joint centred on the pivot when transitioning between the erect or mated and collapsed or retracted configurations;
**Fig. 9** shows a perspective view of the second embodiment of the joint when partially retracted or collapsed;
**Fig. 10** shows a cross-section through the second embodiment of the joint when partially retracted or collapsed;
**Fig. 11** shows a perspective view of the second embodiment of the example joint in the mated or erect configuration;
**Fig. 12** shows an enlarged perspective view of the second embodiment of the example joint in the mated or erect configuration centred on the collar of the second body;
**Fig. 13** shows a cross-section of the second embodiment of the example joint in the mated or erect configuration;
**Fig. 14** shows a side view of the first embodiment of the example joint in the mated or erect configuration;
**Fig. 15** shows a perspective view of the first embodiment of the joint when partially retracted or collapsed;
**Fig. 16** shows a side view of the first embodiment of the joint when partially retracted or collapsed;
**Fig. 17** shows a perspective view of the first embodiment of the joint when retracted or collapsed;
**Fig. 18** shows another perspective view of the first embodiment of the joint when retracted or collapsed.

### Specific description

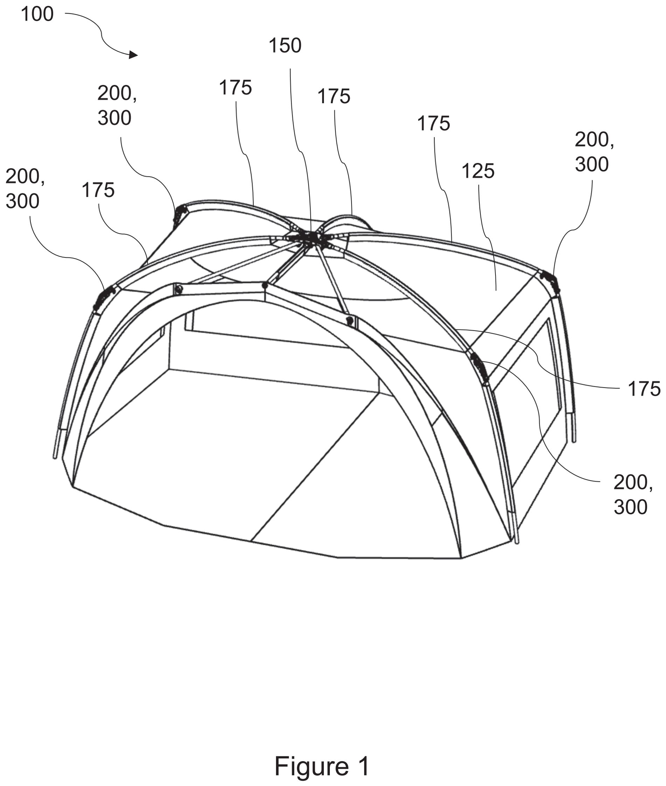

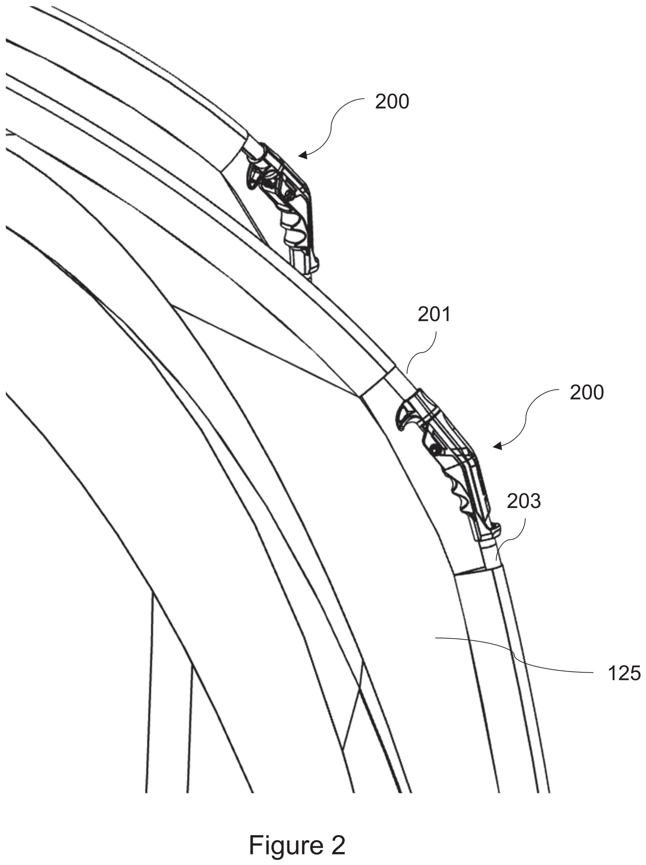

**Fig. 1** shows a perspective view of an example portable shelter 100 comprising a tent frame having a hub 150 from which a plurality of limbs 175 extend in an erect configuration. In the example shown there are five limbs 175 that are legs that extend in the erect configuration to the ground. There are also three further limbs 175 that are arms that do not extend to the ground. Fabric 125 is supported by the limbs 175 of the portable shelter 100 to provide a shelter to a user. To aid in portability of the portable shelter 100, each of the limbs 175 that are legs that extend to the ground in normal use have an elbow joint 200, 300, an example of which is shown in more detail in **Fig. 2****.** The limbs 175 are also pivotable relative to the hub 150 to further aid in portability of the shelter.
**Fig. 2** shows a perspective view of a first embodiment of an example joint 200. Each limb 175 is in effect divided into two support poles, a first support pole 201 and a second support pole 203, and the two poles 201, 203 are pivotable about the joint 200. The joint 200 is operable between a mated or erect configuration, where the first support pole 201 and second support pole 203 are extended, and a retracted or collapsed configuration where the first support pole 201 and second support pole 203 are folded relative to each other about the joint 200, for example in the retracted or collapsed configuration the first support pole 201 and the second support pole 203 may be generally parallel to each other. It can be seen that in the mated or erect configuration the joint 200 does not hold the first support pole 201 and second support pole 203 such that they are "straight" or parallel to each other, but rather the joint 200 has a slight bend (for example, between 10 and 50 degrees, preferably between 25 and 40 degrees) to help create a curve and "domed" shape to the portable shelter (for example, the first support pole 201 and the second support pole 203 may be held at an obtuse angle relative to each other, for example between 150 and 170 degrees). It will also be appreciated that the first support pole 201 and second support pole 203 do not need to be completely straight, either, but might also be gently curved and have a slight bend, for example in the same direction as the bend in the joint 200.

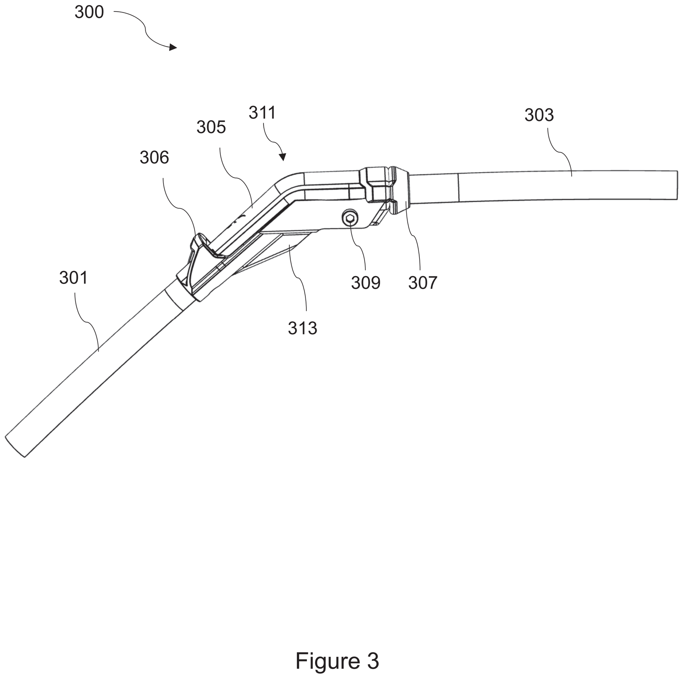

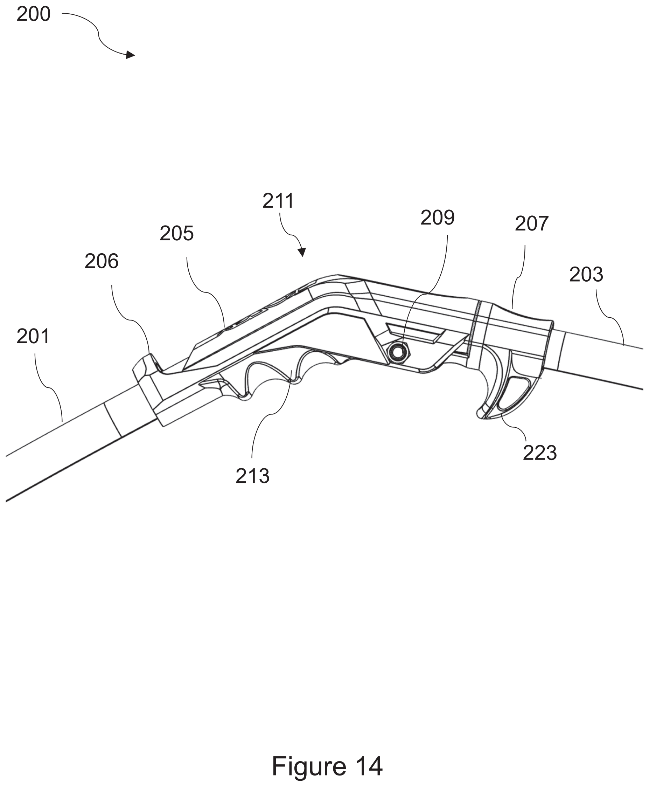

**Figs. 3 to 13** show a second embodiment of an example joint 300, very similar to the first embodiment of the example joint 200 shown in **Fig. 2****.** The first embodiment of the joint 200 shown in **Fig. 2** is also shown in more detail in **Figs. 14 to 18** and will be discussed in more detail below. However, it will be understood that both embodiments of the joint 200, 300 function in broadly the similar way, and that features and functionality described with respect to one embodiment may be used with the other embodiment, and vice-versa. It will therefore be appreciated that like reference numerals denote features with the same or similar functionality.

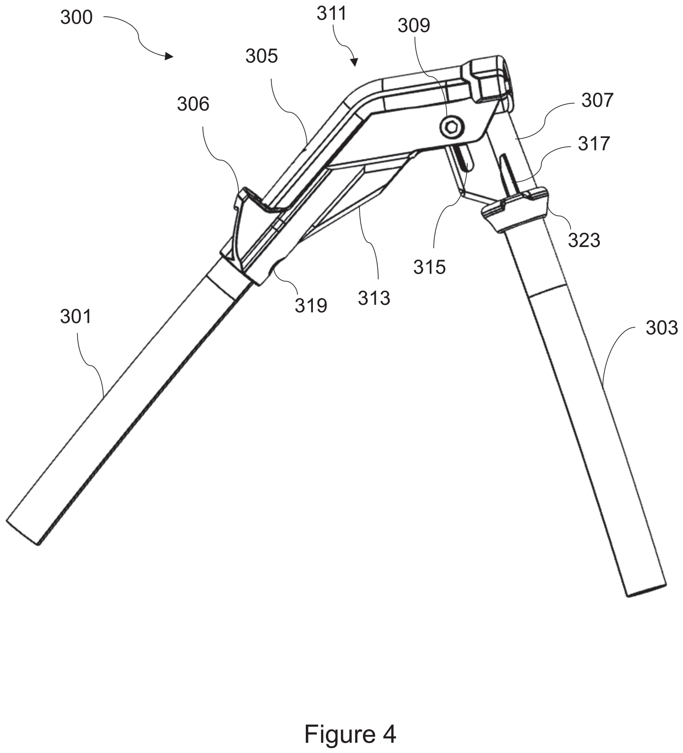

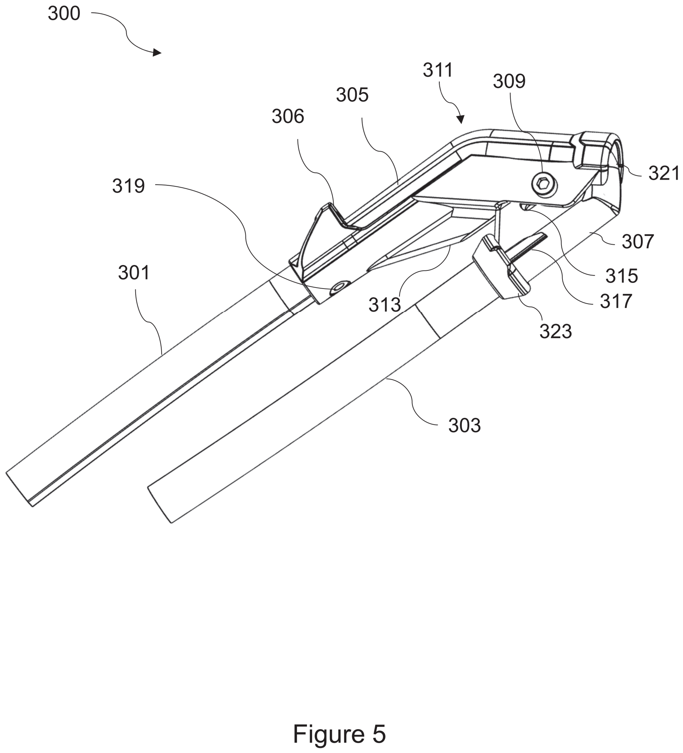

**Fig. 3** shows a side view of the second embodiment of the example joint 300 in the mated or erect configuration, **Fig. 4** shows a side view of the second embodiment of the joint 300 of **Fig. 3** in a partially collapsed or retracted configuration, and **Fig. 5** shows a side view of the second embodiment of the joint 300 of **Figs. 3** **and** **4** in the fully collapsed or retracted configuration.

As shown in **Figs. 3 to 5****,** the joint 300 comprises a first support pole 301 fixedly coupled to a first body 305, and a second support pole 303 fixedly coupled to a second body 307.

The first body 305 comprises a bore at a proximal end for receiving the first support pole 301, and the second body 307 also comprises a bore at a proximal end for receiving the second support pole 303. The first support pole 301 may be coupled to the first body 305 via an interference fit (for example between the bore and the first support pole 301), and/or via the use of a fastener 319 which may be a screw. The second support pole 303 may also be coupled to the second body 307 via an interference fit (for example between the bore and the second support pole 303) and/or via the use of a fastener (not shown).

The second body 307 is coupled to the first body 305 via a biased pivot 309 such that the second support pole 303 is pivotable relative to the first support pole 301. As can be seen in more detail in **Fig. 4****,** the biased pivot 309 is fixed relative to the first body 305 and the second body 307 has a slot 315 for receiving the biased pivot 307. The slot 315 extends through the second body 307 such that it extends from one side to the other.

The biased pivot 309 extends through the slot 315 in a direction generally transverse to the longitudinal axis of the second body 307, and is slideable within the slot 315 of the second body 307. The biased pivot 309 is offset from the longitudinal axis of the first support pole 301 and the longitudinal axis of the second support pole 303. For example, in the example shown the biased pivot 309 is arranged to be on the inside side of the joint 300.

The joint 300 is configured to hold the second support pole 303 at an angle relative to the first support pole 301. To this end, the first body 305 comprises a bend 311. A proximal portion of the first body 305 that is fixedly coupled to the first support pole 301 is one side of the bend 311, and a distal portion of the first body 305 that mates with the second body 307 is the other side of the bend 311.

The first body 305 also comprises an optional rib 313 connecting the proximal and distal portions of the first body 305 either side of the bend 311 on the inside of the bend 311. The rib 313 is configured to abut the second body 307 when the second body 307 is in the retracted configuration. The rib 313 may also act to provide strength to the joint 300.

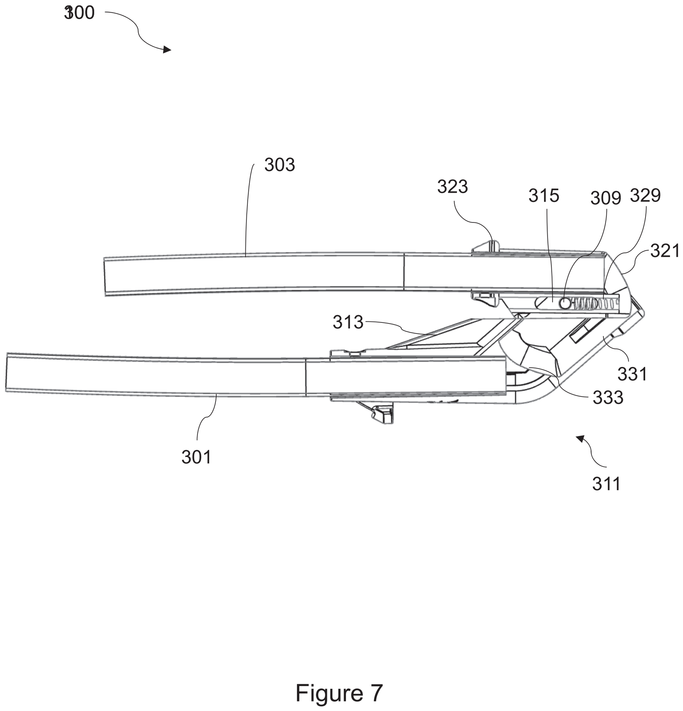

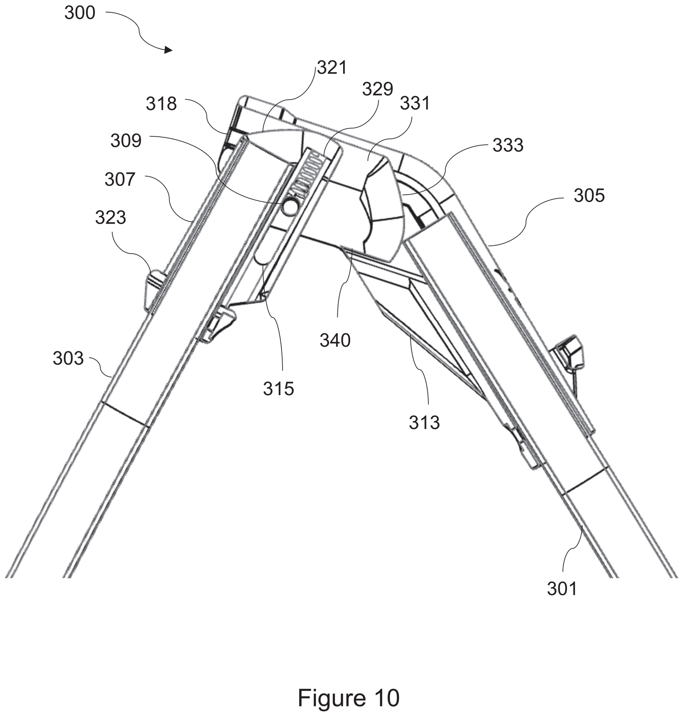

The slot 315 in the second body 307 is offset from the longitudinal axis of the second support pole 303 and is arranged parallel to the longitudinal axis of the second support pole 303 such that the second body 307 is slideable in a direction parallel to the longitudinal axis of the second support pole 303. As shown in more detail for example in **Figs. 7** **and** **10** described in more detail below, the second body 307 comprises biasing means 329. The biasing means 329 is configured to engage with the pivot 309 in the slot 315 to exert pressure against the pivot 309 in the slot 315 in a manner that acts to pull the second body 307 towards the first body 305.

As shown in **Fig. 3****,** the second body 307 is configured to mate with a corresponding portion of the first body 305 in a mated configuration and the second body 307 is retractable against the biased pivot 309 and pivotable about the biased pivot 309 from the mated configuration to a retracted or collapsed configuration, as shown in **Figs. 4** **and** **5****.** When the second body 307 is in the mated configured it is rotationally fixed relative to the first body 305; in other words the second body 307 and therefore the second support pole 303 cannot pivot about the pivot 309. When the second body 307 is retracted out of the mated configuration to the retracted configuration, the second body 307 and the second support pole 303 are pivotable relative to the first body 305 and first support pole 301.

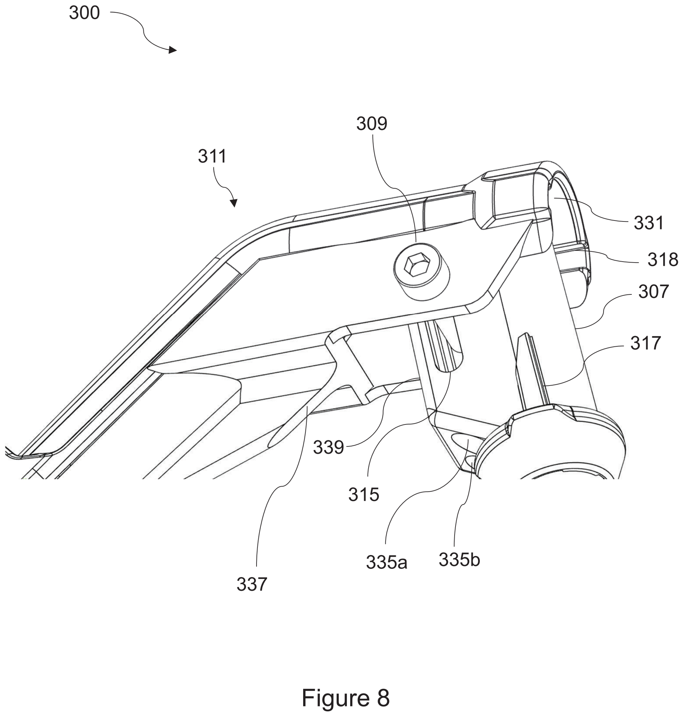

As can be seen in **Fig. 4****,** the second body 307 may also comprise a pair of optional ridges 317 spaced either side of the second body 307. As can be seen for example in **Fig. 8****,** the pair of ridges 317 are configured to engage with a corresponding pair of optional slots 318 on the first body 305 to inhibit rotation of the second body 307 relative to the first body 305 when the second body 307 is received by the first body 305 in the mated configuration. The distal ends of the ridges 317 may be pointed or wedge-shaped to facilitate insertion of the ridges 317 into the corresponding slots 318.

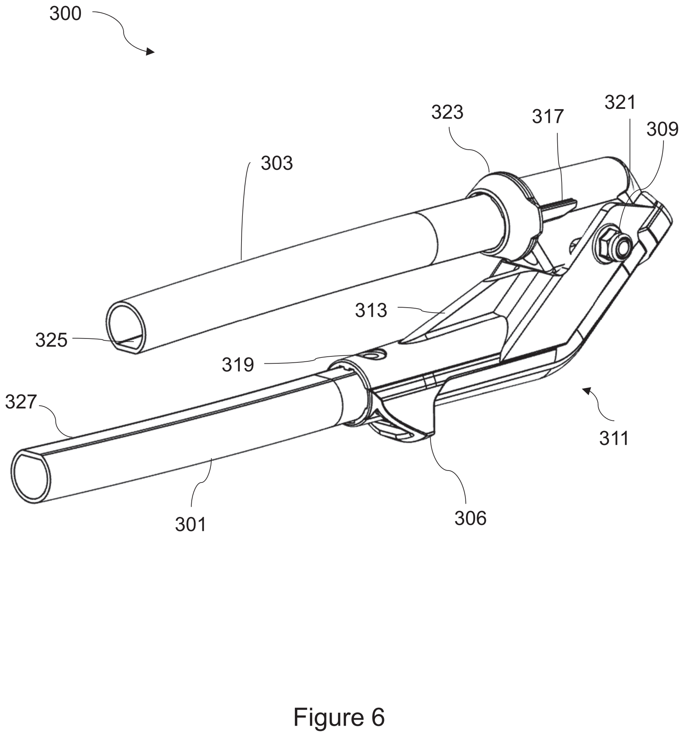

**Fig. 6** shows a perspective view of the joint 300 of **Figs. 2 to 5** in the retracted or collapsed configuration. **Fig. 6** shows how the first body 305 comprises a fastener 319 to secure the first body 305 to the first support pole 301. In the example shown the fastener 319 is a screw, although it will be understood that other fastening means known in the art may be employed.

**Fig. 6** also shows how the second body 307 has a circular collar 323 at the proximal end of the second body 307. The collar 323 may be configured to abut the first body 305 when the joint is in the mated configuration. The collar 323 therefore may advantageously provide a clear visual indicator when the joint is correctly erected. Furthermore, the collar 323 may provide a useful grip to enable the user to pull on to retract the second body 307 from the first body 305 for disassembly.

**Fig. 6** also shows how the first body 305 may comprise an optional grip 306 at the proximal end of the first bod 305. In this example the grip 306 is a rounded protrusion extending out from the body of the first body 305 providing an inclined slope. The grip 306 may also provide a useful feature to enable the user to pull on to facilitate disassembly/retraction of the joint 300. Additionally or alternatively the optional grip 306 may be provided to accept a detachable strap, for example a hook and loop material, to attach a second layer of material to the portable shelter 100 over the top of the frame to the top half of the portable shelter 100.

**Fig. 7** shows a cross-section of the second embodiment of the example joint 300. As can be seen in **Fig. 7****,** the second body 307 comprises biasing means 329 located in the slot 315, and in this example the biasing means 329 is a helical spring. The slot 315 may be rounded inside to form a cylindrical or barrel shape that extends in a direction parallel to the longitudinal axis of the second body 307 and/or the longitudinal axis of the second support pole 303, such that the largely cylindrical biasing means 329 may be contained with the barrel-shaped slot 315 (in other words, the height of the slot 315 inside the second body 307 may be higher than the height of the slot 315 at the sides of the second body 307, and the diameter of the biasing means may be greater than the diameter of the pivot 309 and greater than the height of the slot 315 at the sides of the second body 307). The biasing means 329 may be axially offset from the longitudinal axis of the second support pole 303.

In some examples there may be two biasing means 329 located adjacent to each other and parallel to each other, and correspondingly the slot 317 may comprise a pair of barrel-shaped cavities each arranged to receive a respective biasing means 329 One biasing means 329 may act against one side of the pivot 309 and the other biasing means 329 may acts against the other side of the pivot 309.

The second body 307 comprises a proximal end for receiving the second support pole 303 and a protrusion at a distal end. A distal portion of the first body 305 comprises a receiving portion 331 configured to house and receive at least a corresponding distal portion of the second body 307 in the mated configuration. The receiving portion 331 of the first body 305 is a bore 331 for receiving the protrusion of the second body 307. The protrusion of the second body 307 is configured to extend in a direction corresponding to the longitudinal axis of the second support pole 303. The mouth of the receiving portion 331 of the first body 305 may be generally circular and may comprise a thickened flange, which may improve the structural integrity of the joint 300 and also provide a larger surface with which to abut/mate with the collar 323 of the second body 307.

**Fig. 8** shows a perspective enlarged view of the joint 300 centred on the pivot 309 when transitioning between the erect or mated and collapsed or retracted configurations. **Figs. 7** **and** **8** show how the rib 313 is configured to abut a flat bottom face 339 of the second body 307 when the second body 307 is in the retracted configuration. Advantageously this means that the joint 300 cannot be retracted too far and prevents the second support pole 303 pivoting too far relative to the first support pole 301.

As shown in **Figs. 7****,** **10** **and** **13****,** the protrusion of the second body 307 comprises a chamfered distal end 321, and wherein the bore 331 in the first body 305 also comprises a chamfered proximal portion 333 for receiving the chamfered distal end 321 of the second body 307. The shape of the chamfer on both the protrusion of the second body 307 and the receiving portion 331 of the first body 305 is generally arcuate. Advantageously the chamfer facilitates rotation of the second body 307 relative to the first body 305 when the second body 307 has been retracted past a selected threshold retraction distance but is at least still partially inside the receiving portion/bore 331, as shown for example in **Figs. 7** **and** **10****.**

The biasing means 329 acts against the pivot 309 located in the slot 315 and a distal end of the slot 315, to draw the second body 307 and thereby the second support pole 303 in a distal direction toward the first body 305. As shown for example in **Figs. 7** **and** **10****,** due to the shape of the joint 300 being bent, and due to the presence of the rib 313 and the flat bottom face 339 of the second body 307 preventing further rotation of the second body 307 relative to the first body 305, when the joint 300 is in the retracted or collapsed configuration, the distal end 321 of the second body 307 is still retained inside the receiving portion 331 of the first body 305 even in the retracted or collapsed configuration.

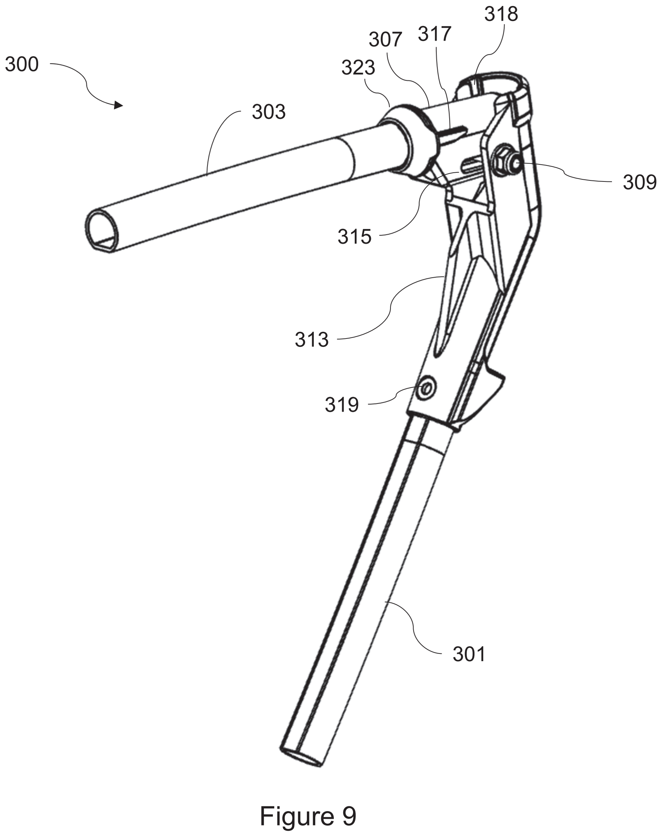

**Fig. 9** shows a perspective view of the second embodiment of the joint 300 when partially retracted or collapsed. It can be seen how the first body 305 comprises an optional fastener 319 for securing the first support pole 301 to the first body 305. It will be understood that the second body 307 may also comprise a similar fastener. However, it will also be understood that in other examples a fastener may be dispensed with, for example the first support pole 301 may be fixedly coupled to the first body 305 via an interference fit, and the second support pole 303 may be fixedly coupled to the second body 307 via an interference fit.

**Fig. 10** shows a cross-section through the second embodiment of the joint 300 when partially retracted or collapsed. The depth of the receiving portion 331 of the first body 305, and if present, the length of the optional ridges 317 and corresponding slots 318, are selected such that rotation of the second body 307 relative to the first body 305 is inhibited until the second body 307 is retracted relative to the first body 305 past a selected threshold retraction distance, whereupon rotation of the second body 307 relative to the first body 305 is permitted. For example, the selected threshold retraction distance may correspond to the length of the ridges 317 and slots 318. However, it also may correspond to the length of the protrusion of the second body 307 and the receiving portion 331 of the first body, and/or the diameter of the protrusion of the second body 307 and/or the diameter of the receiving portion 331. For example, the length of the ridges 317 and slots 318 may be based on the diameter of the protrusion of the second body 307 and/or the diameter of the receiving portion 331. For example, rotation may be facilitated once the distance between the distal end of the protrusion of the second body 307 and the pivot 309 is equal to or less than the diameter of the protrusion of the second body 307.

The receiving portion 331 has a bottom lip 340. The length of the bottom lip 340 may be selected to retain the second body 307 in the first body 305 when in the mated or erect configuration, but to facilitate retraction and collapsing of the joint when the second body 307 is retracted relative to the first body 305. The length of the bottom lip 340 may be based on the length of the ridges 317 and slots 318, and/or the diameter of the protrusion of the second body 307 and/or the diameter of the receiving portion 331.

As shown in **Fig. 10****,** once the second body 307 has been retracted past this selected threshold retraction distance, the second body 307 and thereby the second support pole 303 may pivot relative to the first body 305 and first support pole 301 about the pivot 309. The chamfered distal end 321 of the second body 307 is shaped to smoothly abut the inside of the receiving portion 331 of the first body 305 which are configured to remain in contact with each other even during the retraction/collapsing process due to the action of the biasing means 329 against the pivot 309.

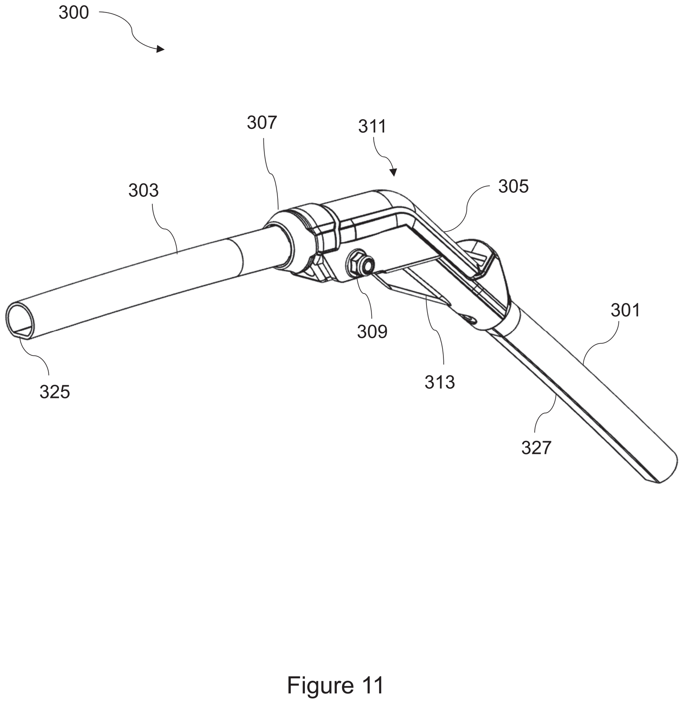

**Fig. 11** shows a perspective view of the second embodiment of the example joint 300 in the mated or erect configuration. It can be seen how the first support pole 301 and the first body 307 each comprise an anti-rotation feature, wherein the anti-rotation feature 327 of the first support pole 301 is configured to correspond to the anti-rotation feature of the first body 305. In the example shown, the anti-rotation feature 327 of the first support pole 301 is a flat, and the first body 305 has a corresponding flat to engage the flat of the first support pole 301. Similarly, the second support pole 303 and the second body 307 each comprise an anti-rotation feature, wherein the anti-rotation feature 325 of the second support pole 303 is configured to correspond to the anti-rotation feature of the second body 307. In the example shown, the anti-rotation feature 325 of the second support pole 303 is a flat, and the second body 307 has a corresponding flat to engage the flat of the second support pole 303.

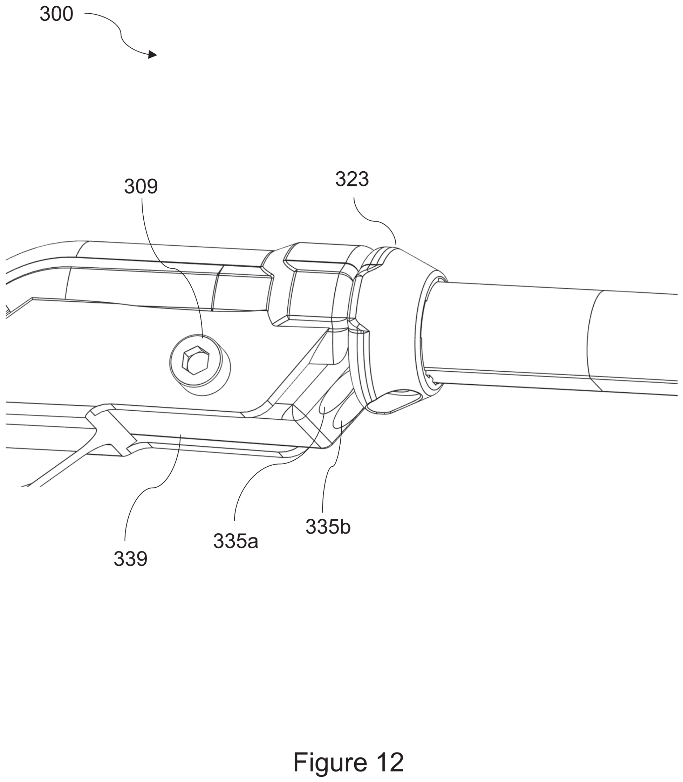

**Fig. 12** shows an enlarged perspective view of the second embodiment of the example joint 300 in the mated or erect configuration centred on the collar 323 of the second body 307. It can be seen how the second body 307 comprises a pair of apertures 335a, 335b either side of the second body 307 and positioned below the second support pole 303. The pair of apertures 335a, 335b each open to a cylindrical or barrel shaped tube configured to each receive a corresponding biasing means 329 in a side-by-side configuration underneath but parallel to the longitudinal axis of the second support pole 303. Once a biasing means 329 has been inserted into each cylindrical or barrel shaped tube, each aperture 335a, 335b may be closed (e.g., with a blank having an interference fit) to retain the biasing means 329. It will be understood that the pivot 309 may be inserted through the slot 315 in the second body 307 after the biasing means 329 have been inserted. In the example shown, the pivot 309 comprises a threaded bolt with a nut or head at each end, however it will be understood that other arrangements would be known to the person skilled in the art.

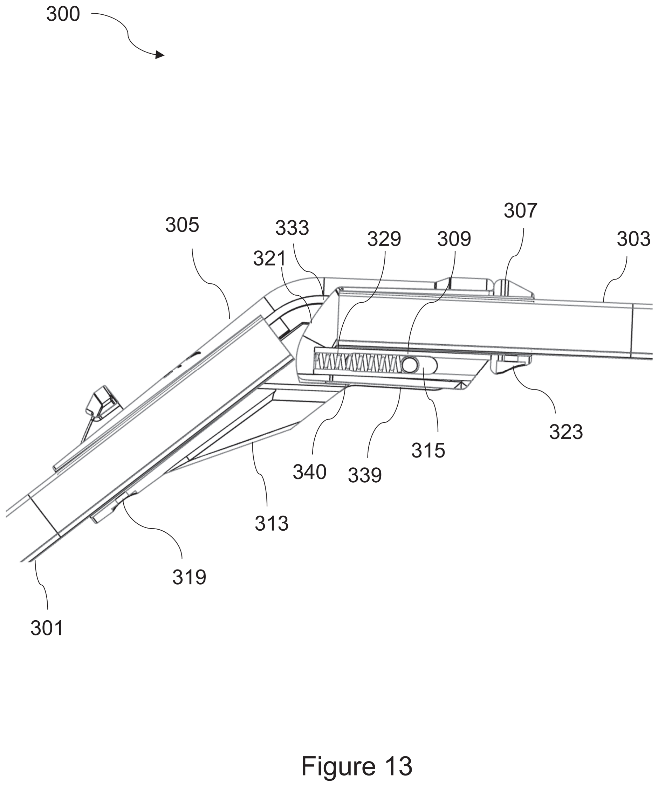

**Fig. 13** shows a cross-section of the second embodiment of the example joint 300 in the mated or erect configuration. It can be seen how the collar 323 of the second body 307 abuts the distal end of the first body 305. It can also be seen how the protrusion of the second body 307, and in particular the flat bottom face 339, rests against the bottom lip 340 of the receiving portion 331 of the first body 305, and how the chamfered distal end 321 of the second body 307 abuts a corresponding chamfered surface 333 on the inside of the receiving portion 331 of the first body 305.

It can be seen how in the mated configuration movement of the second body 307 is confined to an axial movement in and out of the mated configuration against the biasing means 329 parallel to the longitudinal axis of the bore, at least until the second body 307 has been retracted past a selected threshold retraction distance.

**Fig. 14** shows a side view of the first embodiment of the example joint in the mated or erect configuration. As noted above, the first embodiment of the joint 200 functions in much the same way as the second embodiment of the joint 300 discussed above, and it will be appreciated that like reference numerals denote features with the same or similar functionality.

As can been in **Fig. 14****,** the collar 223 of the second body 207 is in the form of a grip configured for engagement by a user to retract the second body 207 relative to the first body 205. The grip in this example embodiment is trigger-shaped; that is, the grip comprises a gently curved protrusion extending out from the second body 207 in a direction towards the inside of the bend of the joint. Having the grip extend in this direction means that when a portable shelter comprising the joint 200 is erected, the grip does not extend out beyond the outline of the portable shelter which may act as a point upon which things may snag, such as the user's clothing or other items the user may be using such as fishing equipment.

In this example the first body 205 also comprises an optional rib 213 connecting the proximal and distal portions of the first body 305 either side of the bend 311 on the inside of the bend 311. The rib 213 has a pair of indents configured for engagement with a user's hand (each indent is configured to receive a user's finger) so that the user can grip each side of the joint 200 to also aid in retraction of the second body 307 from the first body 305.

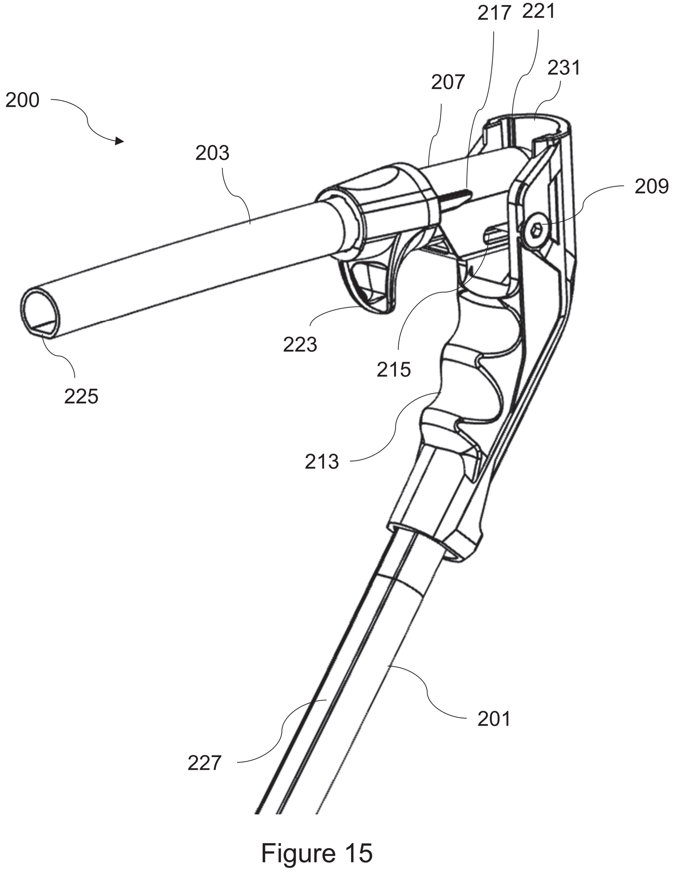

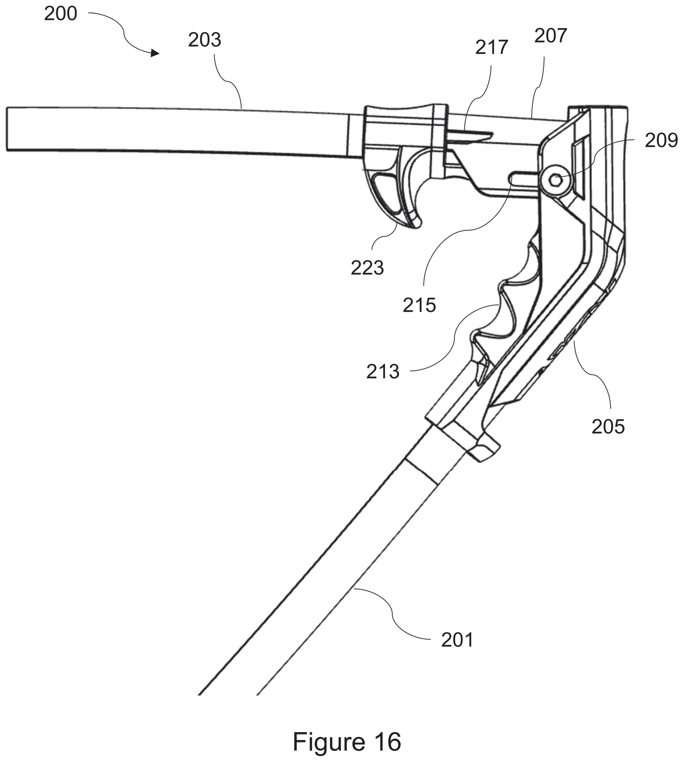

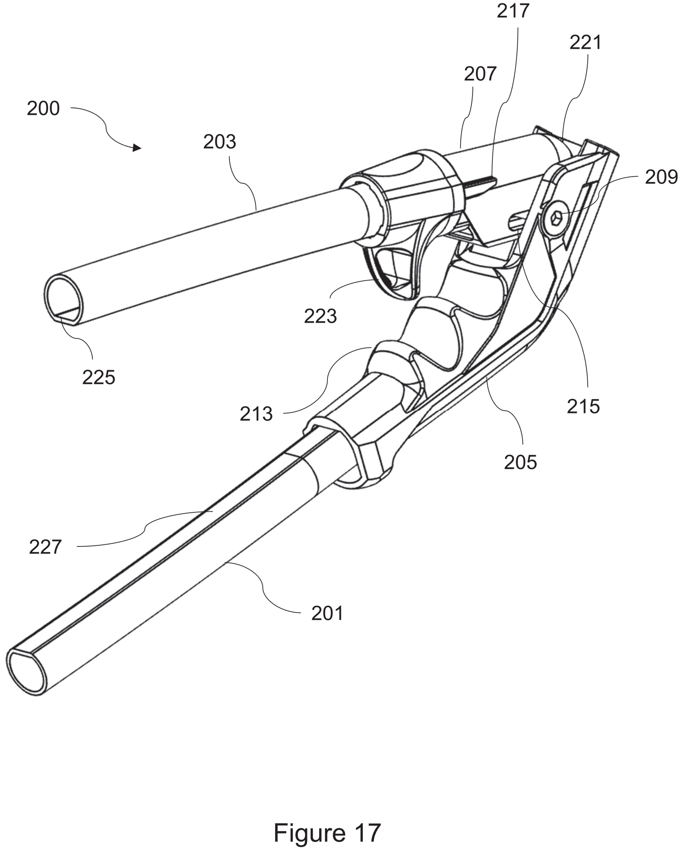

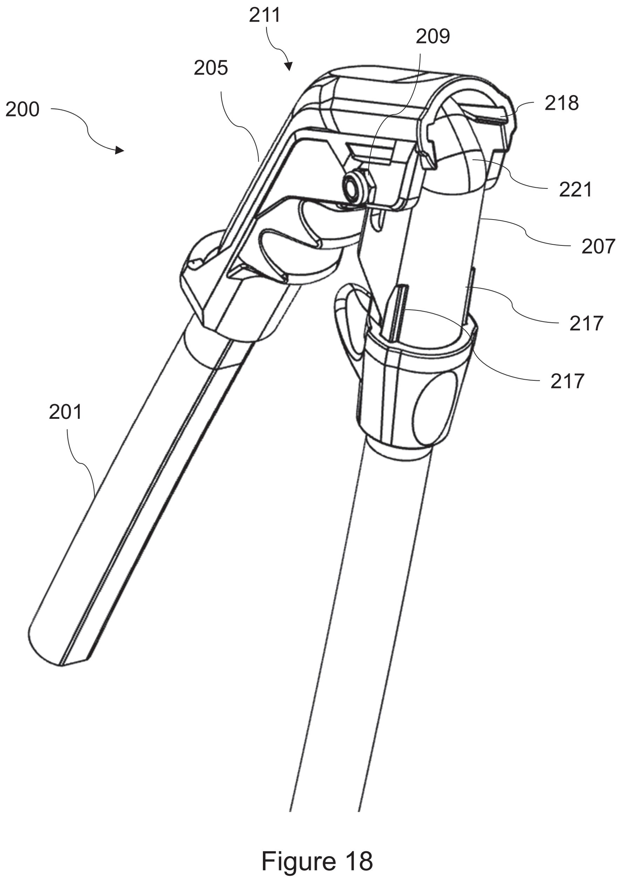

**Fig. 15** shows a perspective view of the first embodiment of the joint when partially retracted or collapsed, and **Fig. 16** shows a side view of the first embodiment of the joint when partially retracted or collapsed. **Fig. 17** shows a perspective view of the first embodiment of the joint when retracted or collapsed, and **Fig. 18** shows another perspective view of the first embodiment of the joint when retracted or collapsed.

As can be seen in **Figs. 15 to 18****,** otherwise the joint 200 of the first embodiment shares many of the features of the joint 300 of the second embodiment described above.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

It will be appreciated from the discussion above that the embodiments shown in the Figures are merely exemplary, and include features which may be generalised, removed or replaced as described herein and as set out in the claims. In the context of the present disclosure other examples and variations of the apparatus and methods described herein will be apparent to a person of skill in the art.

## Claims

1. A joint for a portable shelter, the joint comprising:
a first support pole fixedly coupled to a first body; and
a second support pole fixedly coupled to a second body;
wherein the second body is configured to mate with a corresponding portion of the first body in a mated configuration;
wherein the second body is coupled to the first body via a biased pivot such that the second support pole is pivotable relative to the first support pole; and
wherein the second body is retractable against the biased pivot and pivotable about the biased pivot from the mated configuration to a retracted configuration.

2. The joint of claim 1 wherein the biased pivot is fixed relative to the first body and the second body has a slot for receiving the biased pivot, and wherein the biased pivot is slideable within the slot of the second body.

3. The joint of claim 2 wherein the slot in the second body is offset from the longitudinal axis of the second support pole and is arranged parallel to the longitudinal axis of the second support pole such that the second body is slideable in a direction parallel to the longitudinal axis of the second support pole.

4. The joint of claim 2 or 3 wherein the biased pivot is offset from the longitudinal axis of the first support pole and the longitudinal axis of the second support pole.

5. The joint of claim 2, 3 or 4 wherein the second body comprises biasing means configured to engage with the pivot in the slot, and wherein the biasing means comprises at least one spring axially offset from the longitudinal axis of the second support pole.

6. The joint of any of the previous claims wherein when the second body is in the mated configured it is rotationally fixed relative to the first body, and when the second body is retracted out of the mated configuration to the retracted configuration, the second body and the second support pole are pivotable relative to the first body and first support pole.

7. The joint of any of the previous claims wherein rotation of the second body relative to the first body is inhibited until the second body is retracted relative to the first body past a selected threshold retraction distance, whereupon rotation of the second body relative to the first body is permitted.

8. The joint of any of the previous claims wherein a distal portion of the first body comprises a receiving portion configured to house and receive at least a corresponding distal portion of the second body in the mated configuration.

9. The joint of any of the previous claims wherein the second body comprises a proximal end for receiving the second support pole and a protrusion at a distal end, wherein the receiving portion of the first body is a bore for receiving the protrusion of the second body, and wherein in the mated configuration movement of the second body is confined to an axial movement in and out of the mated configuration against the biasing means parallel to the longitudinal axis of the bore.

10. The joint of claim 9 wherein the protrusion of the second body is configured to extend in a direction corresponding to the longitudinal axis of the second support pole, and wherein the protrusion of the second body comprises a chamfered distal end, and wherein the bore in the first body also comprises a chamfered proximal portion for receiving the chamfered distal end of the second body, and wherein the joint is configured to hold the second support pole at an angle relative to the first support pole.

11. The joint of any of the previous claims wherein the first body comprises a bend, and wherein a proximal portion of the first body that is fixedly coupled to the first support pole is one side of the bend, and a distal portion of the first body that mates with the second body is the other side of the bend, and wherein the first body comprises a rib connecting the proximal and distal portions of the first body either side of the bend, wherein the rib is configured to abut the second body when the second body is in the retracted configuration.

12. The joint of any of the previous claims wherein the first body comprises a bore at a proximal end for receiving the first support pole, and wherein the first body comprises a fastener for fixedly coupling the first support pole to the first body, and wherein the first support pole and the first body each comprise an anti-rotation feature, wherein the anti-rotation feature of the first support pole is configured to correspond to the anti-rotation feature of the first body.

13. The joint of any of the previous claims wherein the second support pole and the second body each comprise an anti-rotation feature, wherein the anti-rotation feature of the second support pole is configured to correspond to the anti-rotation feature of the second body, and wherein the second body comprises a grip for engagement by a user to retract the second body relative to the first body.

14. The joint of any of the previous claims wherein the second body comprises a pair of ridges spaced either side of the second body, wherein the pair of ridges are configured to engage with a corresponding pair of slots on the first body to inhibit rotation of the second body relative to the first body when the second body is received by the first body in the mated configuration.

15. A portable shelter comprising a tent frame having at least one joint of any of the previous claims, the portable shelter having sheet material supported by the tent frame.
